# EUROPÄISCHE PATENTANMELDUNG

(11) **EP 2 103 367 A1**
(43) Veröffentlichungstag der Anmeldung: **23.09.2009**
(21) Anmeldenummer: 09003250.9
(22) Anmeldetag: 06.03.2009
(51) Int. Cl.: B23B 31/14

(54) **Spanneinrichtung für Gegenstände z.B. für zu bearbeitende Werkstücke**

(30) Priorität: 20.03.2008 DE 102008015340
(71) Anmelder: Stiefelmayer-Spanntechnik Gmb & Co. KG, 73770 Denkendorf (DE)
(72) Erfinder: Schneider, Jens, 73119 Zell (DE); Nogger, Wolfgang, 70794 Filderstadt (DE)
(74) Vertreter: Kratzsch, Volkhard

(57) **Zusammenfassung**

Die Erfindung betrifft eine Spanneinrichtung (10) für Gegenstände, z. B. für zu bearbeitende Werkstücke, die ein Gehäuse (11) mit mehreren darin verschiebbar geführten Spannbolzen (12) für Spannbacken und mit einer an Mitnehmern (13) der Spannbolzen (12) angreifenden, axial wirkenden Betätigungseinrichtung (15) zum Verschieben der Spannbolzen (12) zu Spann- und Lösezwecken aufweist. An den Spannbolzen (12) greift eine Fliehkraftausgleichsanordnung (22) an. (Fig. 1).

## Beschreibung

Die Erfindung bezieht sich auf eine Spanneinrichtung für Gegenstände, z. B. zu bearbeitende Werkstücke, der im Oberbegriff des Anspruchs 1 genannten Art.

Eine Spanneinrichtung dieser Art ist bekannt aus DE 10 2005 041 963 A1. Insbesondere bei derartigen Schrägbolzenfuttern lässt bei höherer Drehzahl der eine solche Spanneinrichtung tragenden Maschinenspindel die auf gespannte Gegenstände, z. B. zu bearbeitende Werkstücke, ausgeübte Spannkraft aufgrund auftretender Fliehkräfte nach, da sich in Richtung der Spannbolzen eine zum gespannten Gegenstand gerichtete Kraftkomponente ergibt, um die die wirksame Spannkraft nachlässt. Unter Umständen besteht daher die Gefahr, dass gespannte Werkstücke nicht nur locker werden sondern sich aus der Spanneinrichtung lösen. Um dies zu verhindern, sind die zulässigen Antriebsdrehzahlen für Spanneinrichtungen dieser Art eingeschränkt.

Der Erfindung liegt die Aufgabe zugrunde, eine Spanneinrichtung der eingangs genannten Art zu schaffen, die nicht den nachteiligen Folgen durch Fliehkräfte ausgesetzt ist, und dabei einfach, kompakt und kostengünstig gestaltet ist.

Die Aufgabe ist bei einer Spanneinrichtung der eingangs genannten Art gemäß der Erfindung durch die Merkmale im Anspruch 1 gelöst. Weitere Erfindungsmerkmale und vorteilhafte Ausgestaltungen ergeben sich aus den daran anschließenden übrigen Ansprüchen.

Durch die Erfindung ist eine Spanneinrichtung geschaffen, die einfach, kompakt und kostengünstig und die vor allem nicht den nachteiligen Folgen der im Betrieb auftretenden Fliehkräfte ausgesetzt ist. Aufgrund der Fliehkraftausgleichsanordnung ist die Spanneinrichtung hinsichtlich der zulässigen Antriebsdrehzahl wegen etwaiger nachteiliger Auswirkungen herrschender Fliehkräfte nicht eingeschränkt. Die Gefahr, dass ein gespannter Gegenstand, z. B. ein gespanntes Werkstück, sich unter Drehzahl lockert oder gar löst, ist durch die Fliehkraftausgleichsanordnung beseitigt. Die Fliehkraftausgleichseinrichtung bewirkt, dass ein fliehkraftabhängiger Abfall der von den Spannbolzen auf den Gegenstand ausgeübten Spannkraft vollständig oder zumindest teilweise ausgeglichen wird aufgrund einer fliehkraftabhängig erzeugten derartigen Kraftkomponente, die die Spannbolzen in Richtung zur Maschinenspindel zieht und im Idealfall genauso hoch ist, wie die unter Fliehkrafteinwirkung entstehende, in Richtung der Spannbolzen und zum gespannten Gegenstand hin wirkende Kraftkomponente. Die einzelnen Elemente der Fliehkraftausgleichsanordnung sind einfach, kostengünstig und bedingen keinen großen Aufwand und haben auch keinen stärker ins Gewicht fallenden Platzbedarf, so dass die Spanneinrichtung auch mit Fliehkraftausgleichsanordnung klein und kompakt gestaltet werden kann.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch allein die aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:
- Fig. 1: einen schematischen Schnitt einer Spanneinrichtung, vereinfacht dargestellt,
- Fig. 2: eine perspektivische Explosionsdarstellung von zwei miteinander zusammenwirkenden Elementen der Spanneinrichtung in Fig.1, in demgegenüber größeren Maßstab.

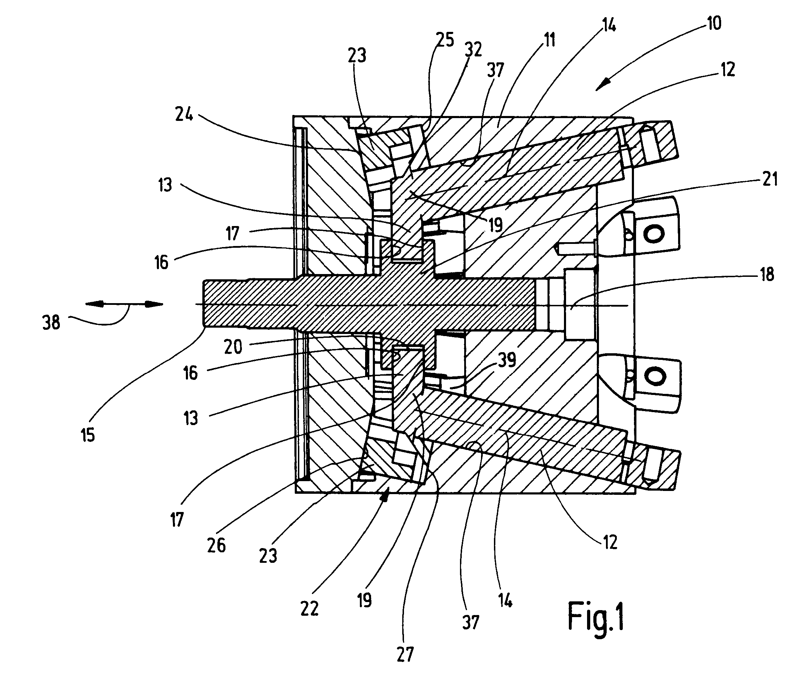

Fig. 1 zeigt einen schematischen Schnitt einer Spanneinrichtung 10 für nicht weiter gezeigte Gegenstände, z. B. für zu bearbeitende Werkstücke, wobei sich die Spanneinrichtung 10 z. B. in der den nicht gezeigten Gegenstand spannenden Spannstellung befinden kann. Diese Spannstellung bedingt einen nicht gezeigten gespannten Gegenstand. Hierbei kann es sich um die verschiedensten Arten und Formen von Gegenständen, insbesondere Werkstücken, handeln.

Die Spanneinrichtung 10 weist ein nur schematisch dargestelltes Gehäuse 11 auf, das der besseren Übersicht wegen relativ vereinfacht dargestellt ist. Bei dem Gehäuse 11 handelt es sich z. B. um ein zumindest im wesentlichen rotationssymmetrisches Gebilde, was jedoch nicht zwingend ist. Die Spanneinrichtung 10 ist für zumindest drei nicht dargestellte, in etwa gleichen Umfangswinkelabständen voneinander lösbar angeordnete Spannbacken vorgesehen. Diese nicht gezeigten Spannbacken werden von entsprechenden Spannbolzen 12 betätigt, die in jeweils zugeordneten Bohrungen 37 des Gehäuses 11 verschiebbar geführt sind. Beim gezeigten Ausführungsbeispiel ist die Spanneinrichtung 10 in besonderer Gestaltung als Schrägbolzenfutter ausgebildet, bei dem die Bohrungen 37 schräg zur Spannrichtung und Löserichtung gemäß Pfeil 38 und zur Längsmittelachse 18 des Gehäuses 11 verlaufen. Der Winkel dieses Schrägverlaufes, gemessen zwischen der Längsmittelachse 14 des jeweiligen Spannbolzens 12 und der Längsmittelachse 18 des Gehäuses 11, ist variabel. Dieser Winkel kann z. B. zwischen etwa 10° und 25° liegen. Er beträgt beispielsweise mit Vorteil etwa 10° bis 15°. Beim gezeigten Ausführungsbeispiel ist die Spanneinrichtung 10 für z. B. sechs Spannbacken ausgebildet und weist dementsprechend insgesamt sechs Spannbolzen 12 jeweils gleicher Gestaltung auf.

An den im Innern 39 des Gehäuses 11 befindlichen Endbereichen 19 der Spannbolzen 12 tragen diese damit einstückige oder separate, damit lösbar verbundene Mitnehmer 13, die etwa radial nach innen gerichtet sind. Mit ihren radial innen befindlichen Enden sind die Mitnehmer 13 in einer z. B. umlaufenden Ringnut 20 eines Teils 21 einer Betätigungseinrichtung 15 aufgenommen. Innerhalb der Ringnut 20 weist das Teil 21 auf der in Fig. 1 linken Seite eine Anschlagfläche 16 und auf der in Fig. 1 rechten Seite eine Anschlagfläche 17 auf, an denen der jeweilige Mitnehmer 13 des jeweiligen zugeordneten Spannbolzens 12 anschlagen kann.

Für das Spannen eines nicht gezeigten Gegenstandes mittels der Spanneinrichtung 10 wird diese durch Verschiebung des Teils 21 der Betätigungseinrichtung 15 in Fig. 1 nach rechts in Offenstellung gebracht, wobei die Anschlagfläche 16 gegen die jeweiligen Mitnehmer 13 drückt. Dadurch werden die jeweiligen Spannbolzen 12 in Richtung ihrer Längsmittelachse 14 ausgeschoben. Zum Spannen eines Gegenstandes mittels der Spannbolzen 12 wird die Betätigungseinrichtung 15 mit einer in Pfeilrichtung 38 in Fig. 1 nach links wirkenden Zugkraft beaufschlagt. Dabei liegt die Anschlagfläche 17 des Teils 21 an der zugeordneten Seite der jeweiligen Mitnehmer 13 an, so dass die Spannbolzen 12 in Pfeilrichtung 38 nach links mit der Spannkraft derart beaufschlagt werden, dass über die Spannbolzen 12 deren Spannbacken gegen den zu spannenden Gegenstand gelangen und dieser zwischen den Spannbacken z. B. radial gespannt wird. Die an den Mitnehmern 13 angreifende, axial wirkende Betätigungseinrichtung 15 zum Verschieben der Spannbolzen 12 zu Spann- und Lösezwecken ist in Fig. 1 vereinfacht dargestellt. Sie kann in vielfältiger Weise konstruktiv gestaltet sein.

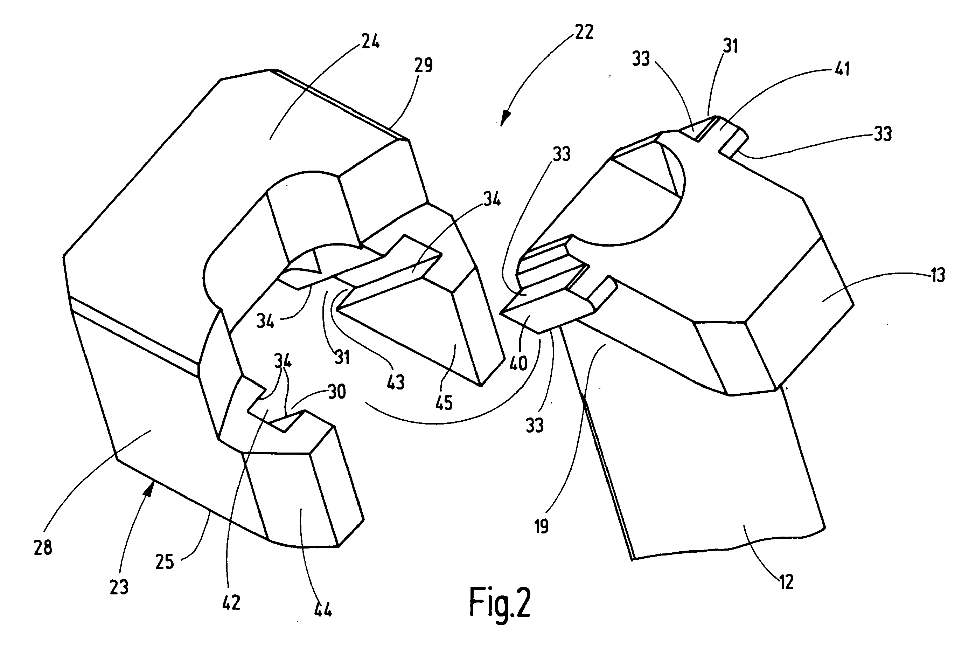

Die Spanneinrichtung 10 weist im Inneren des Gehäuses 11 eine Fliehkraftausgleichsanordnung 22 auf, die an den einzelnen Spannbolzen 12 direkt oder über die Mitnehmer 13 angreift. Diese Fliehkraftausgleichsanordnung 22 weist je Spannbolzen 12 einen Gewichtskörper 23 auf, der im Gehäuse 11 verschiebbar gehalten und geführt ist. Der Gewichtskörper 23 kann z. B. etwa rechteckförmig und hierbei etwa gabelförmig gestaltet sein, wie aus Fig. 2 ersichtlich ist. Mit beiden Breitseiten 24 und 25 ist jeder Gewichtskörper 23 formschlüssig und dabei gleitverschieblich an zugeordneten Flächen 26 bzw. 27 des Gehäuses 11 gehalten und geführt. Der Abstand der einander gegenüberliegenden Außenflächen 28 und 29 (Fig. 2) des jeweiligen Gewichtskörpers 23 voneinander kann zumindest geringfügig größer bemessen sein als der Abstand von im Inneren 39 des Gehäuses 11 vorgesehenen, in Fig. 1 nicht sichtbaren Gegenflächen, mit denen die Außenflächen 28, 29 zur Halterung um die Längsmittelachse 14 zusammenwirken. Auf diese Weise ist jeder Spannbolzen 12 mit seinem Mitnehmer 13 und dem zugeordneten, damit gekoppelten Gewichtskörper 23 zumindest in Grenzen um seine Längsmittelachse 14 schwenkbeweglich. Diese Winkelbeweglichkeit um die Längsmittelachse 14 kann z. B. etwa +/- 5° betragen und dient der selbsttätigen Spannausrichtung der an den Spannbolzen 12 angebrachten Spannbacken beim Spannen eines Gegenstandes.

Der jeweilige Gewichtskörper 23 ist in Richtung parallel zu den Breitseiten 24, 25 entlang den Flächen 26, 27 des Gehäuses 11 quer zur Längsmittelachse 14 des jeweiligen Spannbolzens 12 verschiebbar. Diese Verschieberichtung verläuft vorzugsweise zumindest etwa rechtwinklig zur Längsmittelachse 14. Jeder Gewichtskörper 23 ist mit dem zugeordneten Spannbolzen 12 über einen schrägen Schiebesitz 30, 31 relativ verschiebbar gekoppelt. Diese Kopplung erfolgt in der Weise, dass der Gewichtskörper 23 unter Drehzahl aufgrund der daran angreifenden Fliehkraft und aufgrund der Kopplung mit Schiebesitz 30, 31 mit dem Spannbolzen 12 einen fliehkraftabhängigen Abfall der vom Spannbolzen 12 auf den gehaltenen Gegenstand ausgeübten Spannkraft vollständig oder zumindest teilweise ausgleicht. Die Fliehkraftausgleichsanordnung 22 bewirkt somit eine Kompensation des fliehkraftabhängigen Abfalls der Spannkraft. Die jeweiligen Gewichtskörper 23 stellen Fliehgewichte dar. Sie liegen jeweils in der gleichen Radialebene wie die jeweils zugeordneten Spannbolzen 12 mit Mitnehmern 13. Dabei greifen die jeweiligen Gewichtskörper 23 an dem Endbereich 19 des jeweiligen Spannbolzen 12 bzw. am Mitnehmer 13 an, der im Inneren 39 des Gehäuses 11 angeordnet ist.

Die Kopplung zwischen dem jeweiligen Gewichtskörper 23 und Spannbolzen 12 erfolgt längs einer Schrägebene, die in Fig. 1 mit 32 angedeutet ist. Je Schrägebene 32 verläuft in Bezug auf die Längsmittelachse 14 des jeweiligen Spannbolzens 12 unter einem Winkel zwischen etwa 30° und 50°. Der Winkel kann vorzugsweise z. B. etwa 45° betragen.

Der Schiebesitz 30, 31 zwischen dem Mitnehmer 13 des jeweiligen Spannbolzens 12 und dem zugeordneten Gewichtskörper 23 ist durch schräge Führungsflächen 33 einerseits und zugeordnete Schrägflächen 34 andererseits gebildet, von denen die Führungsflächen 33 z. B. am Endbereich 19, insbesondere am Mitnehmer 13, des jeweiligen Spannbolzens 12 und die zugeordneten Schrägflächen 34 am jeweils zugeordneten Gewichtskörper 23, oder umgekehrt, ausgebildet sind. Bei den in Fig. 1 und 2 gezeigten Ausführungsbeispiel sind die schrägen Führungsflächen 33 am jeweiligen Mitnehmer 13 und die zugeordneten Schrägflächen 34 am jeweiligen Gewichtskörper 23 vorgesehen. Die Verhältnisse können aber auch vertauscht sein. Am jeweiligen Mitnehmer 13 sind auf beiden Seiten einer Diametralen jeweils schräg verlaufende Längsstege 40, 41 vorgesehen, an denen die schrägen Führungsflächen 33 ausgebildet sind. Diesen Längsstegen 40, 41 sind beidseitige Längsnuten 42, 43 zugeordnet, die entsprechend schräg verlaufende Flanken aufweisen, an denen die Schrägflächen 34 ausgebildet sind. Die Längsnuten 42, 43 sind hier Bestandteil des jeweiligen Gewichtskörpers 23. Die Verhältnisse können statt dessen auch derart vertauscht sein, dass die schrägen Längsstege 40, 41 am jeweiligen Gewichtskörper 23 und die schrägen Längsnuten 42, 43 am jeweiligen Spannbolzen 12, insbesondere dessen Mitnehmer 13, vorgesehen sind.

Beim Beispiel gemäß Fig. 2 ist jeder Gewichtskörper 23 etwa gabelförmig ausgebildet, wobei dessen Gabelschenkel 44, 45 den zugeordneten Spannbolzen 12 am Endbereich 19, insbesondere dessen Mitnehmer 13, übergreifen. Die schrägen Längsnuten 42, 43 sind auf einer Seite, insbesondere innenseitig, der Gabelschenkel 44, 45 angeordnet.

Die Spanneinrichtung 10 kann praktisch wie jedes übliche Backenfutter am Spindelende einer Werkzeugmaschine befestigt werden. Sie ist auch für die nachträgliche Ausrüstung von Werkzeugmaschinen mit derartigen Spanneinrichtungen 10 geeignet. Beim gezeigten Ausführungsbeispiel ist die Spanneinrichtung 10 als Schrägbolzenfutter ausgebildet, bei dem in beschriebener Weise die Spannbolzen 12 in schräg zur Längsmittelachse 18 des Gehäuses 11 verlaufenden Bohrungen 37 des Gehäuses 11 verschiebbar gehalten und geführt sind. Dabei ist die Spanneinrichtung 10 beim gezeigten Ausführungsbeispiel als Außenspannfutter ausgebildet. Es versteht sich, dass z. B. bei gegensinniger Schrägausrichtung der Bohrungen 37 die Spanneinrichtung 10 ohne sonstige Änderungen auch als Innenspannfutter gestaltet werden kann.

Bei anderen, nicht gezeigten Ausführungsbeispielen ist die Spanneinrichtung z. B. als Keilstangenfutter, bei dem die mit Bewegungskeilen versehenen Spannbolzen von der Betätigungseinrichtung 15 betätigt werden, oder als Spanndorn od. dgl. ausgebildet. Daraus wird deutlich, dass die Spanneinrichtung 10 bei den verschiedensten Futterformen und Gestaltungen verwirklicht werden kann.

Bei Drehantrieb einer Werkzeugmaschinenspindel, an der die Spanneinrichtung 10 befestigt ist und mittels der ein Gegenstand, z. B. ein zu bearbeitendes Werkstück, gespannt ist, lässt normalerweise bei steigender Drehzahl mit gleichbleibendem Spanndruck die erzielte Spannkraft aufgrund der auftretenden Fliehkräfte nach. Die aus Spannbolzen 12 und Mitnehmer 13 bestehende Masse erzeugt unter Fliehkrafteinwirkung aufgrund der Schrägausrichtung der Spannbolzen 12 eine Kraftkomponente in Richtung der Längsmittelachse 14 und zum gespannten Gegenstand hin. Um diese Kraft wird die wirksame Spannkraft reduziert, wobei die Gefahr bestehen kann, dass der gespannte Gegenstand, insbesondere ein zu bearbeitendes Werkstück, sich lockert oder frei wird. Aus diesen Gründen sind normale Spanneinrichtungen 10, insbesondere in der Ausbildung als Schrägbolzenfutter, bezüglich der zulässigen Drehzahl eingeschränkt.

Die Spanneinrichtung 10 gemäß der Erfindung beseitigt diese Nachteile und unterliegt keiner Einschränkung der zulässigen Antriebsdrehzahl; denn aufgrund der Fliehkraftausgleichsanordnung 22 beschriebener Art wird ein fliehkraftabhängiger Abfall der von dem jeweiligen Spannbolzen 12 auf den Gegenstand ausgeübten Spannkraft vollständig oder zumindest teilweise ausgeglichen; denn unter Drehzahl werden die Gewichtskörper 23 aufgrund der Fliehkraft entlang der Schrägebene 32 relativ zum Spannbolzen 12 nach außen verschoben. Dadurch wird eine Kraftkomponente erzeugt, die in Richtung der Spannbolzen 12 und schräg gerichtet ist, jedoch vom gespannten Gegenstand, insbesondere Werkstück, weg und in Fig. 1 nach links. Aufgrund dieser Kraftkomponente werden die Spannbolzen 12 in Fig. 1 nach links gezogen. Im Idealfall ist diese resultierende, in Fig. 1 nach links auf die Spannbolzen 12 einwirkende Kraft genauso hoch wie die in Richtung zum gespannten Gegenstand hin weisende schräge Kraftkomponente aufgrund der auf die Spannbolzen 12 und Mitnehmer 13 einwirkenden Fliehkräfte.

## Patentansprüche

1. Spanneinrichtung für Gegenstände, z.B. für zu bearbeitende Werkstücke, die ein Gehäuse (11) mit mehreren darin verschiebbar geführten Spannbolzen (12) für Spannbacken und mit einer an Mitnehmern (13) der Spannbolzen (12) angreifenden, axial wirkenden Betätigungseinrichtung (15) zum Verschieben der Spannbolzen (12) zu Spann- und Lösezwecken aufweist,
**gekennzeichnet durch**
eine an den Spannbolzen (12) angreifende Fliehkraftausgleichsanordnung (22).

2. Spanneinrichtung nach Anspruch 1,
**dadurch gekennzeichnet,**
**dass** die Fliehkraftausgleichsanordnung (22) je Spannbolzen (12) einen Gewichtskörper (23) aufweist, der im Gehäuse (11) in einer zur Längsmittelachse (14) des jeweiligen Spannbolzens (12) quer, vorzugsweise zumindest etwa rechtwinklig, verlaufenden Richtung verschiebbar geführt ist und mit dem zugeordneten Spannbolzen (12) relativ verschiebbar gekoppelt ist, derart, dass der Gewichtskörper (23) unter Drehzahl aufgrund der daran angreifenden Fliehkraft und der Kopplung mit dem Spannbolzen (12) einen fliehkraftabhängigen Abfall der von dem Spannbolzen (12) auf den Gegenstand ausgeübten Spannkraft vollständig oder zumindest teilweise ausgleicht.

3. Spanneinrichtung nach Anspruch 2,
**dadurch gekennzeichnet,**
**dass** der jeweilige Gewichtskörper (23) an dem Endbereich (19) am Spannbolzen (12) oder an dessen Mitnehmer (13) angreift, der im Inneren (39) des Gehäuses (11) angeordnet ist.

4. Spanneinrichtung nach Anspruch 2 oder 3,
**dadurch gekennzeichnet,**
**dass** die Kopplung zwischen dem jeweiligen Gewichtskörper (23) und dem Spannbolzen (12) bzw. dessen Mitnehmer (13) längs einer Schrägebene (32) erfolgt, die in Bezug auf die Längsmittelachse (14 )des jeweiligen Spannbolzens (12) unter einem Winkel zwischen etwa 30° und 50°, vorzugsweise z.B. vom 45°, verläuft.

5. Spanneinrichtung nach einem der Ansprüche 2 bis 4,
**dadurch gekennzeichnet,**
**dass** jeder Gewichtskörper (23) mit dem zugeordneten Spannbolzen (12) oder dessen Mitnehmer (13) über einen schrägen Schiebesitz (30, 31) gekoppelt ist.

6. Spanneinrichtung nach einem der Ansprüche 2 bis 5,
**dadurch gekennzeichnet,**
**dass** jeder Spannbolzen (12) bzw. Mitnehmer (13) dieses auf beiden Seiten einer Diametralen jeweils eine geradlinig verlaufende schräge Führungsfläche (33) und jeder zugeordnete Gewichtskörper (23) je Führungsfläche (33) eine zugeordnete, geradlinig verlaufende Schrägfläche (34) aufweist, die mit der zugeordneten Führungsfläche (33) zusammenwirkt.

7. Spanneinrichtung nach Anspruch 6,
**dadurch gekennzeichnet,**
**dass** die beiden schrägen Führungsflächen (33) jeweils an schräg verlaufenden Längsstegen (40, 41) und die beiden zugeordneten Schrägflächen (34) an schräg verlaufenden Flanken jeweiliger Längsnuten (42, 43), oder umgekehrt, ausgebildet sind.

8. Spanneinrichtung nach Anspruch 7,
**dadurch gekennzeichnet,**
**dass** die schrägen Längsstege (40, 41) am jeweiligen Spannbolzen (12) oder dessen Mitnehmer (13) und die schrägen Längsnuten (42, 43) im jeweiligen Gewichtskörper (23), oder in vertauschter Anordnung, vorgesehen sind.

9. Spanneinrichtung nach einem der Ansprüche 2 bis 8,
**dadurch gekennzeichnet,**
**dass** jeder Gewichtskörper (23) etwa gabelförmig ausgebildet ist und mit den Gabelschenkeln (44, 45) den zugeordneten Spannbolzen (12) bzw. dessen Mitnehmer (13),oder in kinematischer Umkehrung jeder Spannbolzen (12) bzw. Mitnehmer (13) den zugeordneten Gewichtskörper (23) gabelförmig, übergreift.

10. Spanneinrichtung nach Anspruch 9,
**dadurch gekennzeichnet,**
**dass** die schrägen Längsnuten (42, 43) auf einer Seite, insbesondere innenseitig, der Gabelschenkel (44, 45) angeordnet sind.

11. Spanneinrichtung nach einem der Ansprüche 2 bis 10,
**dadurch gekennzeichnet,**
**dass** jeder Spannbolzen (12) in einer zugeordneten Bohrung (37) im Gehäuse (11) gehalten und geführt ist.

12. Spanneinrichtung nach Anspruch 11,
**dadurch gekennzeichnet,**
**dass** jeder Spannbolzen (12) mit seinem Mitnehmer (13) und dem zugeordneten, damit gekoppelten Gewichtskörper (23) zumindest in Grenzen um seine Längsmittelachse (14) schwenkbeweglich ist.

13. Spanneinrichtung nach einem der Ansprüche 1 bis 12,
**gekennzeichnet durch**
die Ausbildung als Schrägbolzenfutter, bei dem die Spannbolzen (12) in schräg zur Längsmittelachse (18) des Gehäuses (11) verlaufenden Bohrungen (37) des Gehäuses (11) verschiebbar geführt sind.

14. Spanneinrichtung nach einem der Ansprüche 1 bis 12,
**gekennzeichnet durch**
die Ausbildung als Keilstangenfutter, bei dem die mit Bewegungskeilen versehenen Spannbolzen (12) von der Betätigungseinrichtung (15) betätigt werden.

15. Spanneinrichtung nach einem der Ansprüche 1 bis 12,
**gekennzeichnet durch**
die Ausbildung als Spanndorn.

16. Spanneinrichtung nach einem der Ansprüche 1 bis 15,
**gekennzeichnet durch**
die Ausbildung als Außenspannfutter oder Innenspannfutter.
